# EUROPÄISCHE PATENTSCHRIFT

(11) **EP 1 767 388 B1**
(45) Veröffentlichungstag und Bekanntmachung des Hinweises auf die Patenterteilung: **14.04.2010**
(21) Anmeldenummer: 06018175.7
(22) Anmeldetag: 31.08.2006
(51) Int. Cl.: B60J 5/06

(54) **Schwenkschiebetür für Fahrzeuge, insbesondere Fahrgasttür für Fahrzeuge des offentlichen Personnenverkehrs**
Pivotable sliding vehicle door , especially for public transport
Porte pivotante-coulissante pour véhicules de transport de personnes

(30) Priorität: 27.09.2005 DE 202005015169 U
(43) Veröffentlichungstag der Anmeldung: 28.03.2007
(73) Patentinhaber: Gebr. Bode GmbH & Co. KG, 34123 Kassel (DE)
(72) Erfinder: Pellegrini, Andreas, 34590 Wabern (DE); Ulrich, Arend, 34576 Homberg (DE)
(74) Vertreter: Bauer Vorberg Kayser Patentanwälte

(56) Entgegenhaltungen:
- EP-A- 0 400 188
- EP-A- 0 957 019
- DE-A1- 19 735 181
- DE-A1- 19 901 016

## Beschreibung

Die Erfindung betrifft eine Schwenkschiebetür für Fahrzeuge, insbesondere eine Fahrgasttür für Fahrzeuge des öffentlichen Personennahverkehrs, mit den Merkmalen aus dem Oberbegriff des Patentanspruchs 1.

Derartige Schwenkschiebetüren sind grundsätzlich an sich bekannt und beispielsweise in EP 1 527 975 A1 beschrieben. Bei derartigen Schwenkschiebetüren tritt einerseits das Problem auf, dass der für die Anordnung und Ausbildung der Antriebsvorrichtung zur Verfügung stehende Raum oft sehr begrenzt ist. Andererseits soll die Tür im geschlossenen Zustand sicher verriegelt sein, damit sie nicht von innen aufgedrückt werden kann, und diese Verriegelung soll sich auch bei Vibrationen und Erschütterungen nicht von selbst lösen können. Weiterhin soll die Verriegelung leicht zu montieren und einzustellen sein.

Der Erfindung liegt die Aufgabe zugrunde, eine Schwenkschiebetür mit den Merkmalen aus dem Oberbegriff des Patentanspruchs 1 so auszugestalten, dass sie eine kompakte und sichere Verriegelungseinrichtung besitzt, die auch unter ungünstigen Verhältnissen des Einbauraums leicht zu montieren und einzustellen ist.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Bei einer bekannten Schwenkschiebetür, wie sie beispielsweise in dem oben zitierten Dokument beschrieben ist, wird die Tragführung in der Geschlossenstellung der Tür dadurch verriegelt, dass der die Versetzung der Tragführung in Querrichtung bewirkende Spreizhebel in der Geschlossenstellung der Tragführung sich in einer Lage im oder kurz hinter dem Totpunkt seiner Schwenkbewegung befindet. Es hat sich nun gezeigt, dass durch starke Vibrationen oder Erschütterungen es vorkommen kann, dass sich der Spreizhebel aus der Totpunktstellung oder Übertotpunktstellung herausbewegt und damit die Tür ungewollt geöffnet werden kann.

Der Grundgedanke der Erfindung besteht darin, in der Einrichtung zur Erzeugung der auf die Tragführung in Versetzungsrichtung wirkenden Kraft und zu deren Verriegelung anstelle des Spreizhebels eine drehbare Verriegelungsscheibe einzusetzen, die einen Verriegelungsschlitz aufweist, in den ein fest mit dem Türportal verbundener Verriegelungsbolzen eingreift. Die Verriegelungsscheibe wird unter Ausnutzung der am Gehäuse des Getriebemotors auftretenden Reaktionskraft derart verdreht, dass der Verriegelungsschlitz in der Geschlossenstellung quer zur Richtung der Versetzungsbewegung der Tragführung und in der Offenstellung parallel zu dieser Bewegungsrichtung steht. Die Verriegelungseinrichtung hat damit die Eigenschaften einer Drehfallenverriegelung mit einem formschlüssig wirkenden Vernegelungselement. Wie weiter unten anhand eines Ausführungsbeispiels ausführlicher erläutert, ist es möglich, das Hebelgestänge, über welches die Reaktionskraft vom Gehäuse des Getriebemotors auf die Verriegelungsscheibe übertragen wird, derart auszubilden, dass es sich in der Geschlossenstellung der Tragführung in einer Totpunkt- oder Übertotpunktlage befindet, so dass auch bei dieser Verriegelungseinrichtung ein Öffnen der Schwenkschiebetür durch Krafteinwirkung von innen nicht möglich ist.

Im Folgenden wird anhand der beigefügten Zeichnungen ein Ausführungsbeispiel für die Schwenkschiebetür nach der Erfindung näher erläutert.

In den Zeichnungen zeigen:
- Fig. 1: eine Schwenkschiebetür in einer Ansicht von außen im geschlossenen Zustand;
- Fig. 2: die Schwenkschiebetür nach Fig. 1 in einer Ansicht von innen;
- Fig. 3: die Schwenkschiebetür gemäß Fig. 2 in einer isometrischen Darstellung von innen;
- Fig. 4: in einer isometrischen, gegenüber Fig. 1 bis 3 vergrößerten Einzeldarstellung eine Ansicht der Antriebseinrichtung der Tür in Pfeilrichtung X in Fig. 2;
- Fig. 5: die Ansicht gemäß Fig. 4 bei abgenommener Antriebsplatte;
- Fig. 6: die Ansicht gemäß Fig. 5 in einer Draufsicht;
- Fig. 7: in einer isometrischen Teildarstellung die Ansicht gemäß Fig. 5 aus einer anderen Richtung;
- Fig. 8: in Draufsicht die Verriegelungselemente aus den Ansichten aus Fig. 5 bis 7 im geöffneten Zustand der Verriegelungseinrichtung;
- Fig. 9: in einer Ansicht analog Fig. 8 die Verriegelungseinrichtung im verriegelten Zustand;
- Fig. 10: in isometrischer Darstellung eine Teildarstellung der Antriebseinrichtung der Schwenkschiebetür nach Fig. 1 bis 9 bei abgenommener Antriebsplatte im Bereich einer Führungsschiene von innen gesehen;
- Fig. 11: die Schwenkschiebetür im Bereich analog Fig. 10 von außen gesehen.

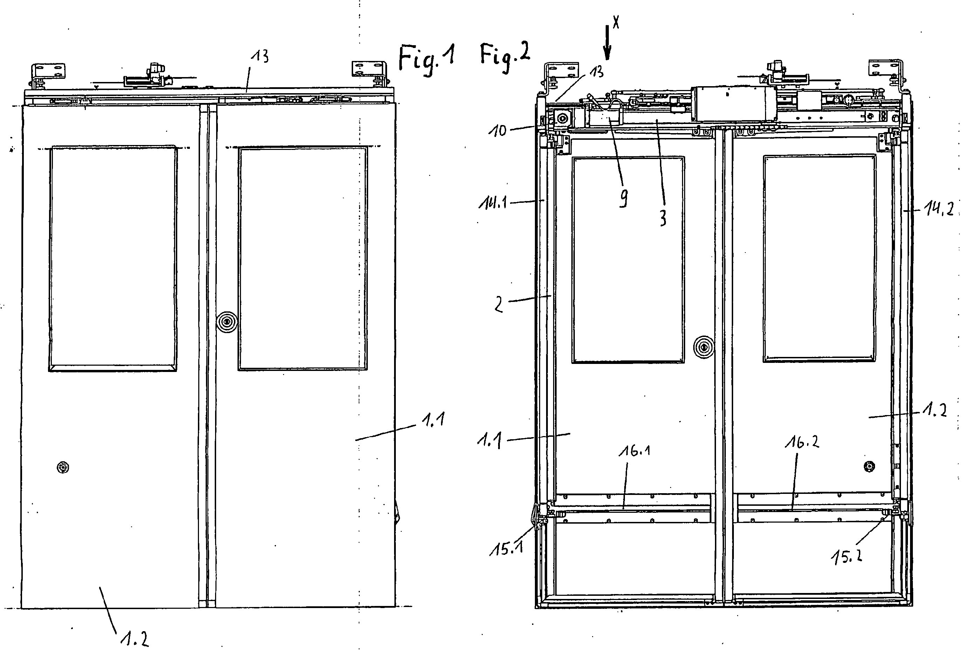

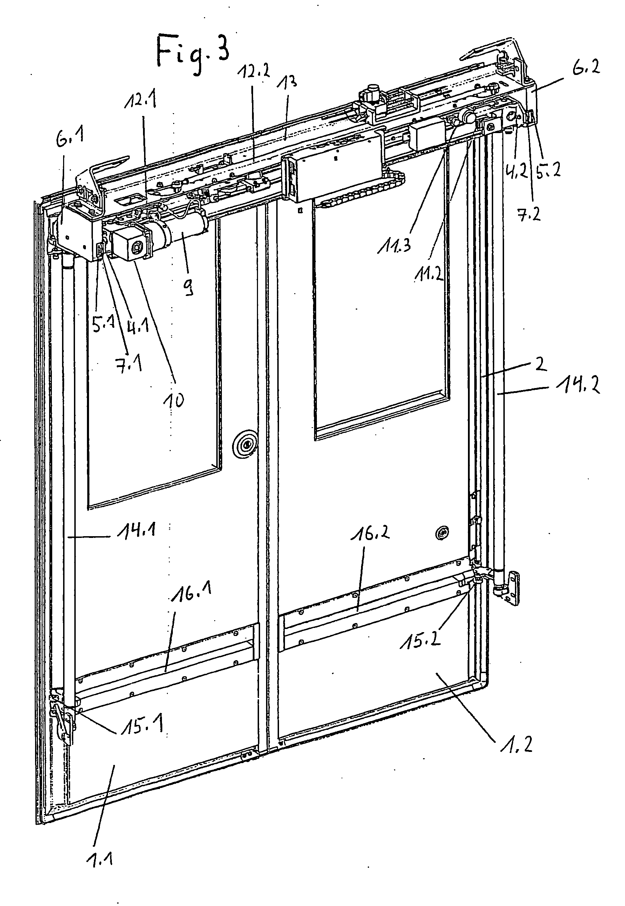

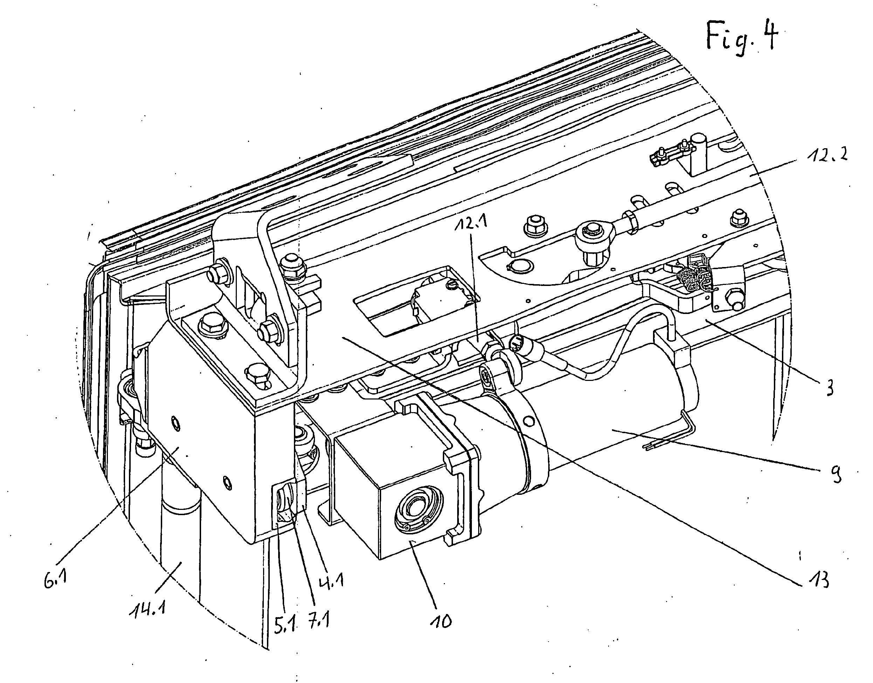

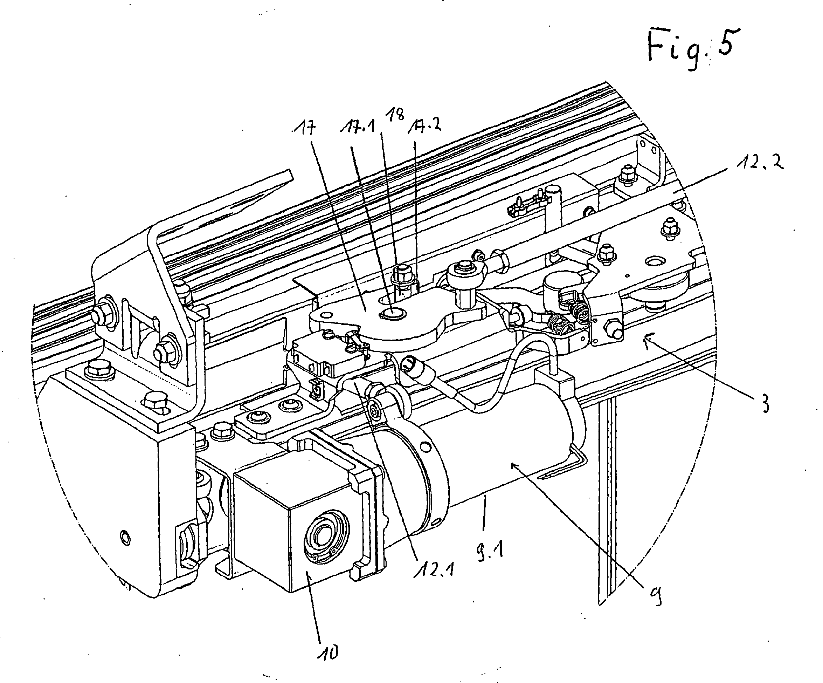

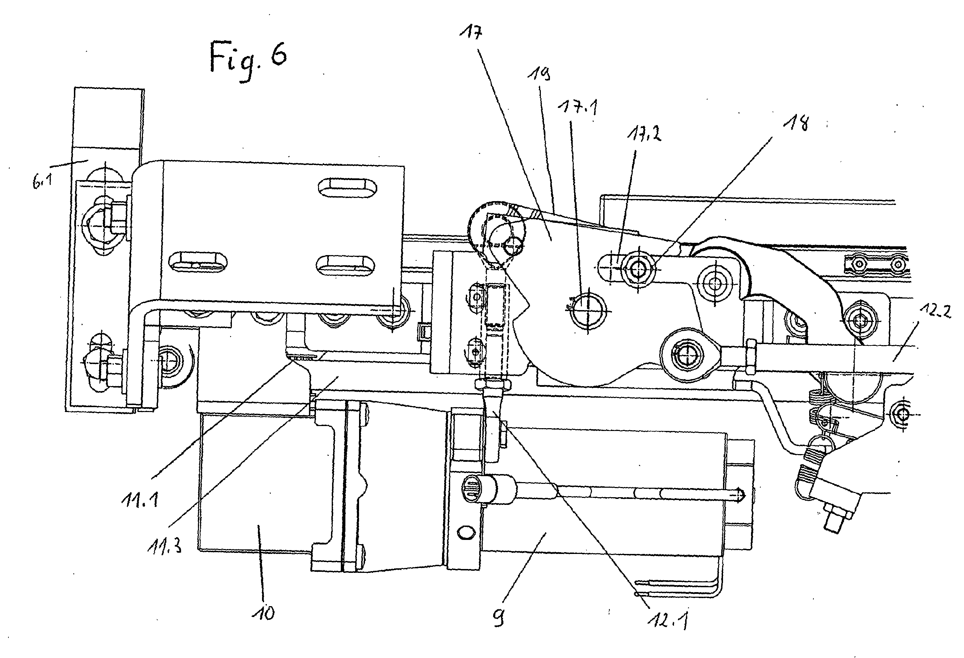

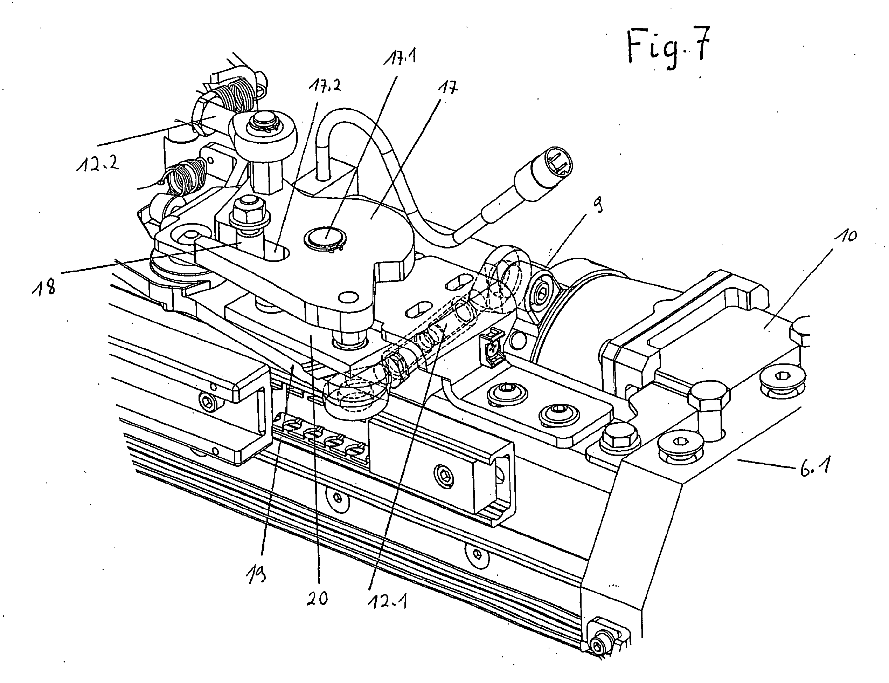

In den Fig. 1 bis 11 sind nur die Teile einer Schwenkschiebetür dargestellt, die im vorliegenden Fall für die Darstellung der Erfindung von Bedeutung sind. Eine ganze Reihe von an sich bekannten Funktionselementen sind aus den Figuren der Zeichnungen nicht erkennbar. Sie sind im Stand der Technik bekannt und können beispielsweise so ausgebildet sein wie in der eingangs erwähnten EP 1 527 975 A1 dargestellt und beschrieben.

In den Zeichnungen ist eine zweiflüglige Schwenkschiebetür dargestellt mit zwei Türblättern 1.1 und 1.2, die über Tragarme 3.1 und 3.2 jeweils mit einer in der Zeichnungen nicht sichtbaren Führungseinheit verbunden sind, die in einer Tragführung aufgehängt ist, die im oberen Bereich des Türportals 2 angeordnet ist und allgemein mit Bezugsziffer 3 bezeichnet ist. Die Tragführung ist an ihren beiden Enden jeweils mit einem Rahmenteil 4.1 und 4.2 fest verbunden und jedes Rahmenteil ist in mit dem Türportal fest verbundenen Querführungen in einer Richtung horizontal und quer zur Türöffnung verschiebbar geführt. Die Querführungen besitzen mit dem Türportal 2 verbundene Halterungen 6.1 und 6.2, in denen in Querrichtung verlaufende Führungsschienen 5.1 und 5.2 angeordnet sind, in welchen an den Rahmenteilen 4.1 und 4.2 angeordnete Führungsrollen 7.1 und 7.2 laufen.

Die Tragführung besitzt in an sich bekannter und in den Zeichnungen nicht sichtbarer Weise für jedes Türblatt eine sich über einen Teil der Türbreite erstreckende, beispielsweise als Rundstange ausgebildete Führungsschiene, auf welcher jeweils die Führungseinheiten geführt sind. Dabei können die Führungsschienen nebeneinander angeordnet und die Führungseinheiten derart ausgebildet sein, dass sie ungehindert aneinander vorbeilaufen können. Aufgrund der oben beschriebenen Querführungen ist die Tragführung 3 zusammen mit den Türblättern 1.1 und 1.2 aus einer Geschlossenstellung, in der die Türblätter in der Fahrzeugwand liegen, in eine Verschiebestellung nach außen versetzbar, in der die Türblätter außen vor der nicht dargestellten Fahrzeugwand liegen.

In dieser Verschiebestellung sind die Türblätter in einander entgegengesetzten Richtungen verschiebbar, bis sie sich in der voll geöffneten Stellung befinden.

Die am Türportal fest angeordneten Halterungen 6.1 und 6.2 für die in Querrichtung verlaufenden Führungsschienen 5.1 und 5.2 sind über eine oberhalb der Tragführung 3 horizontal und parallel zur Tragführung angeordnete Antriebsplatte 13 fest miteinander verbunden.

Als Antriebsvorrichtung sowohl für die Verschiebung der Türblätter 1.1 beziehungsweise 1.2 in Längsrichtung als auch für die Bewegung der Tragführung 3 in Querrichtung und ihre Verriegelung dient ein Planetengetriebemotor 9. Die Abtriebswelle des Planetengetriebemotors 9 ist über ein Winkelgetriebe 10 mit einer Antriebsrolle 11.1 verbunden, die zusammen mit einer Gegenrolle 11.2 und einem Zahn- oder Nockenriemen 11.3 einen Riementrieb bildet. Die Führungseinheiten sind über Verbindungsstücke 24.1 bzw. 24.2 jeweils mit einem Trum dieses Riemens 11.3 derart verbunden, dass ihre Längsbewegung jeweils in einander entgegengesetzten Richtungen erfolgt.

Wie aus den Zeichnungen ersichtlich, ist der Planetengetriebemotor 9 so angeordnet, dass die Längsrichtung seines Gehäuses 9.1 parallel zum Riemen 11.3 des Riementriebs verläuft. Weiterhin ist das Gehäuse 9.1 des Motors um eine zur Abtriebswelle fluchtende Drehachse drehbar an der Tragführung 3 gelagert. Das Gehäuse 9.1 ist weiterhin gegenüber dem Gehäuse des Winkelgetriebes 10 drehbar, was in nicht dargestellter Weise durch ein zwischen die Gehäuse geschaltetes Gleitlager, Kugellager oder Wälzlager geschehen kann.

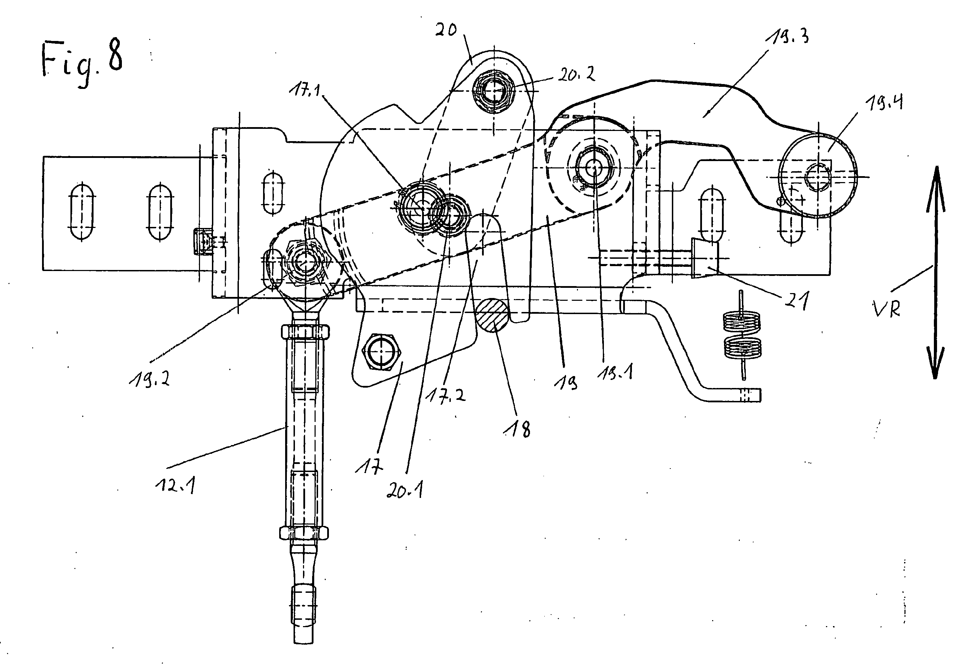

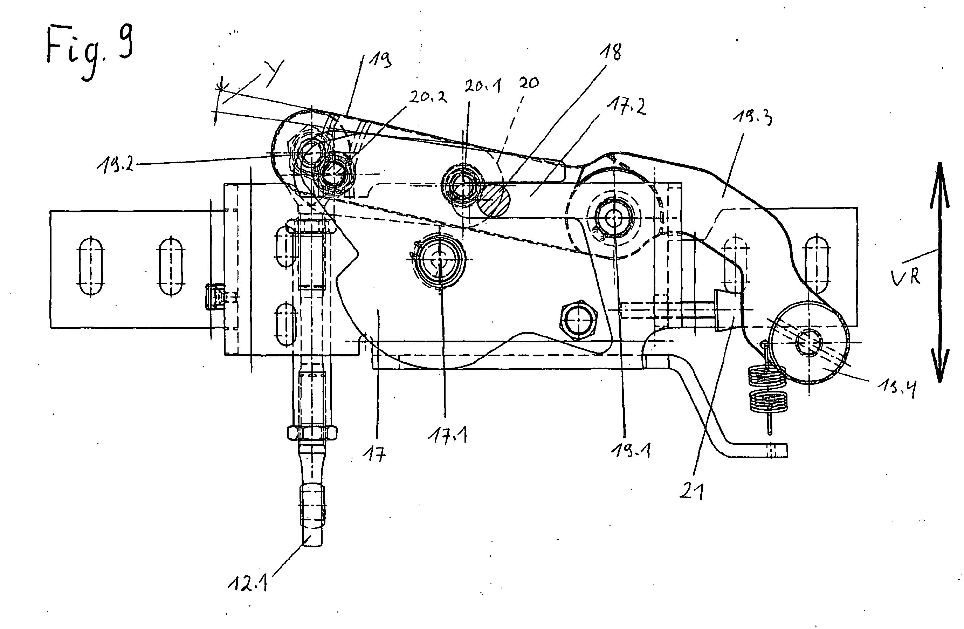

Das drehbare Gehäuse 9.1 des Planetengetriebemotors 9 ist über eine Anlenkstange 12.1 mit dem freien Ende 19.2 eines um eine Schwenkachse 19.1 in horizontaler Ebene verschwenkbaren Verriegelungshebels 19 gelenkig verbunden. Oberhalb des Verriegelungshebels 19 ist eine Verriegelungsscheibe 17 angeordnet, die um eine mit der Tragführung 3 verbundene vertikale Drehachse 17.1 in einer horizontalen Ebene parallel zur Schwenkebene des Verriegelungshebels 19 verdrehbar ist. Die Verriegelungsscheibe 17 besitzt einen Verriegelungsschlitz 17.2, in den ein Verriegelungsbolzen 18 eingreifen kann, der an der Antriebsplatte 13 befestigt ist. Der Verriegelungshebel 19 ist im Bereich zwischen seiner Schwenkachse 19.1 und dem freien Ende 19.2, an dem die Anlenkstange angelenkt ist, mit dem einen Ende 20.1 eines Umlenkhebels 20 gelenkig verbunden, dessen anderes Ende 20.2 an einem Punkt der Verriegelungsscheibe 17 angelenkt ist. Die genauere Anordnung des Verriegelungshebels 19, der Verriegelungsscheibe 17 und des Umlenkhebels 20 sind besonders deutlich den Figuren 8 und 9 zu entnehmen. Danach ist der Anlenkpunkt zwischen dem Ende 20.1 des Umlenkhebels 20 und dem Verriegelungshebel 19 so gewählt, dass bei einer Verschwenkung des Verriegelungshebels 19 die Verriegelungsscheibe 17 in einer Drehrichtung mitgenommen wird, die den Verriegelungsschlitz 17.2 in die Endstellungen quer beziehungsweise parallel zur Bewegungsrichtung der Tragführung 3 führt, die in Fig. 8 und 9 mit VR bezeichnet ist. In den Darstellungen nach Fig. 8 und 9 bewegt sich die Verriegelungsscheibe aus der geöffneten Stellung (Fig. 8), in welcher sich die Tragführung 3 in Richtung VR bewegen kann, entgegen dem Uhrzeigersinn in die verriegelte Stellung (Fig. 9), in welcher eine Bewegung in Richtung VR nicht möglich ist, weil der Verriegelungsbolzen 18 im Verriegelungsschlitz 17.2 festgehalten ist.
Die Verriegelung erfolgt somit in der gleichen Weise wie bei einer Drehfallenverriegelung.
Wie insbesondere aus Fig. 9 abzulesen, ist die Anordnung und Verbindung des Verriegelungshebels 19 und des Umlenkhebels 20 so, dass sich in der in Fig. 9 dargestellten Verriegelungsstellung der Verriegegelungsscheibe 17 der Verriegelungshebel 19 und der Umlenkhebel 20 nach einer kurz vor dieser Stellung erfolgenden Parallelstellung in einer Übertotpunktlage befinden, die in Fig. 9 durch den Winkelbetrag Y angezeigt ist. In dieser Stellung ist es nicht möglich, die Tragführung durch Druck von innen in die geöffnete Stellung zurückzuführen. Zur weiteren Erläuterung sei bemerkt, dass die Funktion des Hebelgestänges aus Verriegelungshebel 19 und Umlenkhebel 20 nach dem Kniehebelprinzip erfolgt, wobei die Totpunktlage durch die Parallelstellung der beiden Hebel gekennzeichnet ist.

Der Verriegelungshebel 19 besitzt einen zweiten Hebelarm 19.3 in seiner Verlängerung über die Schwenkachse 19.1 hinaus. Dieser zweite Hebelarm 19.3 liegt in der Verriegelungsstellung an einem Anschlag 21 an. Weiterhin kann am Ende 19.4 dieses zweiten Hebelarms 19.3 in nicht dargestellter Weise eine Notentriegelungseinrichtung angreifen.

Wie aus den Zeichnungen ersichtlich greift an der Verriegelungsscheibe 17 weiterhin eine Koppelstange 12.2 an, die in der horizontalen Längsrichtung unterhalb der Antriebsplatte 13 zum anderen Ende der Tragführung 3 verläuft und die dort in nicht eigens dargestellter Weise eine weitere Verriegelungsscheibe betätigt, die in der bereits beschriebenen Weise ebenfalls einen Verriegelungsschlitz aufweist, in welchen ein weiterer an der Antriebsplatte 13 befestigter Verriegelungsbolzen eingreift, so dass die Verriegelung der Tragführung in der Geschlossenstellung an beiden Enden sichergestellt ist.

Durch die beschriebene Verriegelungseinrichtung wird die Tragführung 3 nicht nur in der Geschlossenstellung verriegelt, sondern zum Öffnen in einer ersten Phase der Öffnungsbewegung durch die Abstützung des Verriegelungsschlitzes 17.2 am Verriegelungsbolzen 18 um ein kleines Stück in der Richtung VR in Richtung auf die Offenstellung bewegt. In einem weiteren Abschnitt der Öffnungsbewegung wird dann die Führung der Tragführung 3 in die Offenstellung durch die einsetzende Längsbewegung der Türblätter 1.1 und 1.2 in die geöffnete Stellung erreicht, indem eine mit einem der Türblätter verbundene Führungsrolle in einer Führungsschiene geführt wird, die an der Antriebsplatte 13 angeordnet ist und parallel zur Längsrichtung verläuft, wobei am inneren Ende dieser Führungsschiene ein nach innen gekrümmter Abschnitt angeordnet ist, durch welchen die Längsbewegung der Türblätter mit der Querbewegung der Tragführung koordiniert wird.

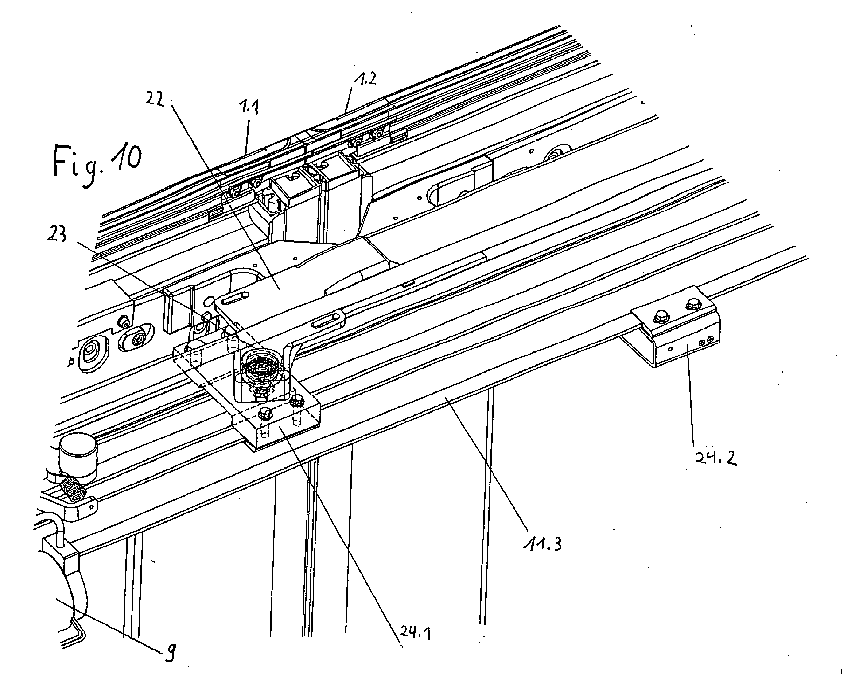

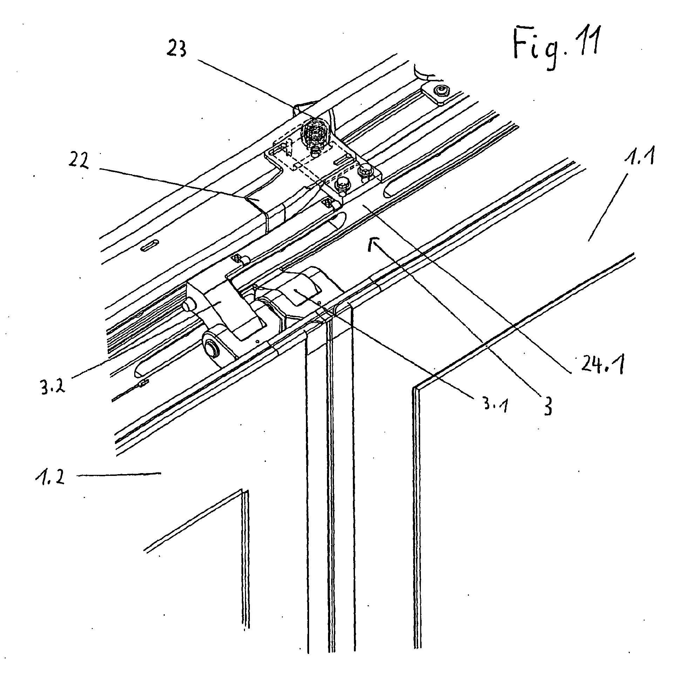

Die Fig. 10 und 11, bei denen zur Verdeutlichung die Antriebsplatte 13 weggelassen ist, zeigen in einer Teildarstellung einen Abschnitt der Führungsschiene 22, in welche die Führungsrolle 23 eingreift, die am Verbindungsstück 24.1 angeordnet ist.

Zur Abstützung der Türblätter 1.1 und 1.2 im unteren Bereich dienen Rollenführungen 15.1 und 15.2. Diese sind mittels Schwenkhebel jeweils mit einer im Bereich des Türportals 2 vertikal angeordneten Drehsäule 14.1 und 14.2 verbunden. Die Drehsäulen sind ihrerseits an ihrem oberen Ende über Schwenkhebel mit der Tragführung 3 derart verbunden, dass eine Bewegung der Tragführung in Querrichtung eine Drehbewegung der Drehsäule bewirkt. Die Rollenführungen 15.1 und 15.2 laufen bei der Längsbewegung der Türblätter 1.1 und 1.2 in an den Türblättern angeordneten Führungsschienen 16.1 und 16.2.

## Patentansprüche

1. Schwenkschiebetür für Fahrzeuge, insbesondere Fahrgasttür für Fahrzeuge des öffentlichen Personennahverkehrs, mit mindestens einem in seiner Längsrichtung verschiebbaren Türblatt (1.1, 1.2), das in einer Tragführung (3) aufgehängt und verschiebbar geführt ist, welche zusammen mit dem Türblatt (1.1, 1.2) aus einer Geschlossenstellung, in der das Türblatt (1.1, 1.2) in der Fahrzeugwand liegt, in eine Verschiebestellung, in der das Türblatt (1.1, 1.2) außen vor der Fahrzeugwand liegt, und zurück versetzbar ist und mit einer Antriebsvorrichtung für die Verschiebebewegung des Türblatts (1.1, 1.2), aus deren Reaktionskraft eine Kraft abgeleitet wird, die mindestens teilweise zur Versetzung der Tragführung (3) und zu deren Verriegelung in der Geschlossenstellung der Tür ausgenutzt wird, wobei die Tragführung (3) mit einem Rahmenteil fest verbunden ist und jedes Rahmenteil in mit dem Türportal (2) verbundenen Querführungen in einer Richtung horizontal und quer zur Türöffnung verschiebbar geführt ist und die Reaktionskraft der Antriebsvorrichtung über Koppelelement auf eine Einrichtung zur Erzeugung einer auf die Tragführung (3) in Versetzungsrichtung wirkenden Kraft und zu deren Verriegelung in der Geschlossenstellung einwirkt und bei welcher die Antriebsvorrichtung einen Getriebemotor (9) aufweist, dessen Gehäuse (9.1) um die Achse der Abtriebswelle drehbar gelagert ist, und die Koppelemente zur Übertragung der Reaktionskraft mit dem Gehäuse (9.1) des Getriebemotors (9) verbunden sind, **dadurch gekennzeichnet, dass** die Einrichtung zur Erzeugung der auf die Tragführung (3) wirkenden Kraft und zu deren Verriegelung eine an der Tragführung (3) angeordnete und um eine vertikale Achse (17.1) drehbare mit einem Verriegelungsschlitz (17.2) versehene Verriegelungsscheibe (17) aufweist, die über ein Hebelgestänge (19, 20) und eine Anlenkstange (12.1) derart mit dem Gehäuse (9.1) des Getriebemotors (9) gekoppelt ist, dass in der Geschlossenstellung der Tragführung (3) der Verriegelungsschlitz (17.2) quer zur Bewegungsrichtung (VR) der Tragführung (3) steht und zur Ermöglichung und Unterstützung der Öffnungsbewegung in eine Lage parallel zur Bewegungsrichtung (VR) der Tragführung (3) verschwenkt wird und ein mit dem Türportal (2) fest verbundener Verriegelungsbolzen (18) derart in vertikaler Richtung angeordnet ist, dass er bei der Bewegung der Tragführung (3) in die Geschlossenstellung in den Verriegelungsschlitz (17.2) einfährt und nach Verschwenken des Verriegelungsschlitzes (17.2) mit der Verriegelungsscheibe (17) verriegelt ist.

2. Schwenkschiebetür nach Anspruch 1, **dadurch gekennzeichnet, dass** das Hebelgestänge (19, 20) so ausgebildet ist, dass es sich in der Geschlossenstellung der Tragführung (3) in einer Totpunkt- oder ÜberTotpunktlage befindet.

3. Schwenkschiebetür nach Anspruch 1 oder 2, **dadurch gekennzeichnet, dass** die Verriegelungsscheibe (17) im Bereich des einen Endes der Tragführung (3) angeordnet und über eine Koppelstange (12.2) mit einer zweiten Verriegelungsscheibe gekoppelt ist, die im Bereich des anderen Endes der Tragführung (3) angeordnet ist und mit einem zweiten Verriegelungsbolzen zusammenwirkt.

4. Schwenkschiebetür nach einem der Ansprüche 1 bis 3, **dadurch gekennzeichnet, dass** das Hebelgestänge einen um eine vertikale Schwenkachse (19.1) schwenkbaren Verriegelungshebel (19) aufweist, an dessen freiem Ende (19.2) die Anlenkstange (12.1) angreift und der im Bereich zwischen Schwenkachse (19.1) und Anlenkpunkt (19.2) mit einem Ende (20.1) eines in einer zweiten Ebene parallel zur Verriegelungsscheibe (17) schwenkbaren Umlenkhebels (20) gelenkig verbunden ist, dessen anderes Ende (20.2) mit einem Punkt an der Verriegelungsscheibe (17) gelenkig verbunden ist, wobei die Anordnung so ist, dass bei einer Verschwenkung des Verriegelungshebels (19) die Verriegelungsscheibe (17) vom Umlenkhebel (20) in einer Drehrichtung mitgenommen wird, die den Verriegelungsschlitz (17.2) in die Stellung quer beziehungsweise parallel zur Bewegungsrichtung (VR) der Tragführung (3) führt.

5. Schwenkschiebetür nach Anspruch 4, **dadurch gekennzeichnet, dass** die Anordnung des Hebelgestänges (19, 20) so ist, dass in oder kurz vor der Verriegelungsstellung der Verriegelungsscheibe (17) der Verriegelungshebel (19) und der Umlenkhebel (20) sich parallel zueinander liegend in einer Totpunktlage beziehungsweise Übertotpunktlage befinden.

6. Schwenkschiebetür nach einem der Ansprüche 1 bis 5, **dadurch gekennzeichnet, dass** oberhalb der Tragführung (3) eine fest mit dem Türportal (2) verbundene, sich in horizontaler Richtung über die Breite der Türöffnung erstreckende Antriebsplatte (13) angeordnet ist, an der die Verriegelungbolzen (18) befestigt sind.

7. Schwenkschiebetür nach Anspruch 6, **dadurch gekennzeichnet, dass** an der Antriebsplatte (13) mindestens eine Führungsschiene (22) angeordnet ist, in welche eine mit dem Türblatt verbundene Führungsrolle (23) eingreift und die einen in Längsrichtung verlaufenden Abschnitt und einen gekrümmt nach innen verlaufenden Abschnitt aufweist und die Längsbewegung des Türblatts (1.1, 1.2) mit der Versetzungsbewegung der Tragführung (3) in Querrichtung koordiniert.

## Claims

1. A pivot sliding door for vehicles, in particular a passenger door for public transport vehicles, with at least one door leaf which is slidable in its longitudinal direction and which is hung and slidably guided in a carrier guide that is adapted to be brought, together with the door leaf, from a closed position, in which the door leaf lies in the vehicle wall, into a displaced position, in which the door leaf lies outside in front of the vehicle wall, and back, and with a drive apparatus for the displacement movement of the door leaf from reaction force of which a force is derived that is at least partially used to displace the carrier guide and to lock it in the closed position of the door, said carrier guide being solidly connected to a frame part and each frame part being slidably guided in transverse guides connected to the door portal in a direction horizontal and transverse to the door opening and the reaction force of the drive apparatus acting via coupling elements onto a device for generating a force acting onto the carrier guide in the direction of displacement and for locking said carrier guide in the closed position and in which said drive apparatus comprises a gear motor the housing of which is carried for rotation about the axis of the driven shaft and said coupling elements being connected to the housing of the drive motor for transmitting the reaction force, **characterized in that** the device for generating the force acting onto the carrier guide (3) and for locking it comprises a locking disc (17), which is disposed on said carrier guide (3), is rotatable about a vertical axis (17.1) and is provided with a locking slot (17.2), said locking disc being coupled to the housing (9.1) of the gear motor (9) via a leverage (19, 20) and a steering rod (12.1) in such a manner that, in the closed position of the carrier guide (3), said locking slot (17.2) is transverse to the direction of movement (VR) of said carrier guide (3) and is pivoted into a position parallel to the direction of movement (VR) of the carrier guide (3) for allowing and assisting the opening movement and that a lock bolt (18) solidly connected to the door portal (2) is disposed in such a manner in the vertical direction that it retracts into the locking slot (17.2) when the carrier guide (3) moves into the closed position and is locked with the locking disc (17) once the locking slot (17.2) has pivoted.

2. The pivot sliding door as set forth in claim 1, **characterized in that** the leverage (19, 20) is configured such that it is in a dead center or above dead center position in the closed position of the carrier guide (3).

3. The pivot sliding door as set forth in claim 1 or 2, **characterized in that** the locking disc (17) is disposed in the region of the one end of the carrier guide (3) and is coupled to a second locking disc via a coupling rod (12.2) that is disposed in the region of the other end of said carrier guide (3) and that cooperates with a second lock bolt.

4. The pivot sliding door as set forth in any one of the claims 1 through 3, **characterized in that** the leverage comprises a locking lever (19) which is pivotal about a vertical pivot axis (19.1) and at the free end (19.2) of which there is attached the steering rod (12.1) and which is hinge-linked to one end (20.1) of a deflection lever (20) pivotal in a second plane parallel to the locking disc (17) in the region between the pivot axis (19.1) and the articulation point (19.2), the other end (20.2) of said deflection lever being hinge-linked to a point at the locking disc (17), the arrangement being such that, when the locking lever (19) is pivoted, the deflection lever (20) carries the locking disc (17) along with it into a direction of rotation which leads the locking slot (17.2) into the position transverse or parallel to the direction of movement (VR) of the carrier guide (3).

5. The pivot sliding door as set forth in claim 4, **characterized in that** the arrangement of the leverage (19, 20) is such that the locking lever (19) and the deflection lever (20) are parallel to each other in a dead center position or in an above dead center position in or shortly before the locking position of the locking disc (17).

6. The pivot sliding door as set forth in any one of the claims 1 through 5, **characterized in that** a drive plate (13), which is solidly connected to the door portal (2) and which extends in the horizontal direction over the width of the door opening, and to which the lock bolts (18) are fastened, is disposed above the carrier guide (3).

7. The pivot sliding door as set forth in claim 6, **characterized in that** at least one guide rail (22) is disposed on the drive plate (13), a guide roll (23) connected to the door leaf engaging into said guide rail which comprises a portion extending in the longitudinal direction and an inward curved portion and which coordinates the longitudinal movement of the door leaf (1.1, 1.2) with the displacement movement of the carrier guide (3) in the transverse direction.

## Revendications

1. Porte pivotante coulissante pour véhicules, en particulier porte passagers pour véhicules de transport en commun de personnes, avec au moins un vantail de porte déplaçable dans sa direction longitudinale qui est suspendu et guidé en translation dans un guide support qui peut être déplacé, conjointement avec le vantail de porte, depuis une position fermée dans laquelle le vantail de porte se trouve à l'intérieur de la paroi du véhicule, dans une position déplacée dans laquelle le vantail de porte est situé à l'extérieur, devant la paroi du véhicule, et vice-versa, et avec un dispositif d'entraînement pour le mouvement de déplacement du vantail de porte, à partir de la force de réaction duquel est dérivée une force qui est utilisée au moins en partie pour le déplacement dudit guide support et pour le verrouillage de celui-ci dans la position fermée de la porte, le guide support étant solidaire d'une partie du châssis et chaque partie de châssis étant guidée en translation dans des guidages transversaux reliés au portail de porte, dans une direction horizontale et transversale à l'ouverture de la porte, et la force de réaction dudit dispositif d'entraînement agissant, via des éléments de couplage, sur un dispositif pour la génération d'une force agissant sur ledit guide support dans la direction de déplacement et pour le verrouillage de celui-ci dans la position fermée, et dans lequel ledit dispositif d'entraînement présente un moto-réducteur dont le carter est logé à rotation autour de l'axe de l'arbre de sortie, et les éléments de couplage pour la transmission de la force de réaction étant reliés au carter dudit moto-réducteur, **caractérisée par le fait que** ledit dispositif pour la génération de la force agissant sur ledit guide support (3) et pour le verrouillage de celui-ci comprend un disque de verrouillage (17) disposé sur ledit guide support (3), tournant autour d'un axe vertical (17.1) et pourvu d'une fente de verrouillage (17.2) et qui est couplé par l'intermédiaire de tringles formant leviers (19, 20) et d'une tige d'articulation (12.1) au carter (9.1) du moto-réducteur (9) de telle manière que, en position fermée du guide support (3), ladite fente de verrouillage (17.2) s'étend transversalement à la direction de mouvement (VR) du guide support (3) et est, pour permettre et supporter le mouvement d'ouverture, pivotée dans une position parallèle à la direction de mouvement (VR) du guide support (3), et qu'un boulon de verrouillage (18) solidaire du portail de porte (2) est disposé dans la direction verticale de telle façon que, lorsque le guide support (3) est déplacé dans la position fermée, il s'engage dans ladite fente de verrouillage (17.2) et est verrouillé après avoir pivoté la fente de verrouillage (17.2) avec ledit disque de verrouillage (17).

2. Porte pivotante coulissante selon la revendication 1, **caractérisée par le fait que** les tringles formant leviers (19, 20) sont réalisées de manière à se trouver, dans la position fermée du guide support (3), dans une position au point mort ou à dépassement de point mort.

3. Porte pivotante coulissante selon la revendication 1 ou 2, **caractérisée par le fait que** ledit disque de verrouillage (17) est disposé au niveau de l'une des extrémités du guide support (3) et est couplé via une tige de couplage (12.2) à un deuxième disque de verrouillage qui est disposé au niveau de l'autre extrémité du guide support (3) et agit de concert avec un deuxième boulon de verrouillage.

4. Porte pivotante coulissante selon l'une quelconque des revendications 1 à 3, **caractérisée par le fait que** lesdites tringles formant leviers comprennent un levier de verrouillage (19) pivotant autour d'un axe vertical de pivotement (19.1), à l'extrémité libre (19.2) duquel se prend ladite tige d'articulation (12.1) et qui, au niveau entre l'axe de pivotement (19.1) et le point d'articulation (19.2), est relié de façon articulée à une extrémité (20.1) d'un levier de renvoi (20) qui peut pivoter, dans un second plan, parallèlement au disque de verrouillage (17) et dont l'autre extrémité (20.2) est reliée de façon articulée à un point sur ledit disque de verrouillage (17), l'agencement étant tel que, lors d'un pivotement du levier de verrouillage (19), le disque de verrouillage (17) est entraîné par ledit levier de renvoi (20) dans une direction de rotation amenant la fente de verrouillage (17.2) dans la position transversale ou bien parallèle à la direction de mouvement (VR) du guide support (3).

5. Porte pivotante coulissante selon la revendication 4, **caractérisée par le fait que** l'agencement des tringles formant leviers (19, 20) est tel que, dans ou juste avant la position de verrouillage du disque de verrouillage (17), le levier de verrouillage (19) et le levier de renvoi (20), tout en s'étendant parallèlement entre eux, se trouvent dans une position au point mort ou bien dans une position à dépassement de point mort.

6. Porte pivotante coulissante selon l'une quelconque des revendications 1 à 5, **caractérisée par le fait qu'**une plaque d'entraînement (13) solidaire du portail de porte (2) et s'étendant dans le sens horizontal sur la largeur de l'ouverture de la porte et sur laquelle sont fixés les boulons de verrouillage (18) est disposée au-dessus du guide support (3).

7. Porte pivotante coulissante selon la revendication 6, **caractérisée par le fait que** sur ladite plaque d'entraînement (13) est disposée au moins une glissière (22) dans laquelle s'engage un galet de guidage (23) relié au vantail de la porte et qui comprend une portion s'étendant dans le sens longitudinal et une portion présentant une allure curviligne vers l'intérieur, et qui coordonne le mouvement longitudinal du vantail de porte (1.1, 1.2) avec le mouvement de déplacement du guide support (3) dans le sens transversal.
